# EUROPEAN PATENT APPLICATION

(11) **EP 2 685 335 A2**
(43) Date of publication of application: **15.01.2014**
(21) Application number: 13176145.4
(22) Date of filing: 11.07.2013
(51) Int. Cl.: G05B 23/02

(54) **System and method for monitoring process control system health**

(30) Priority: 13.07.2012 US 201213549000
(71) Applicant: General Electric Company, Schenectady, New York 12345 (US)
(72) Inventor: Phelps, Mark Robert, Salem, VA Virginia 24153 (US); Brahmavar, Ramesh Pai, 500081 Hyderabad, Andra Pradesh (IN); Rachepalli, Raghavendra Prassad, 500081 Hyderabad, Andhra Pradesh (IN)
(74) Representative: Picker, Madeline Margaret

(57) **Abstract**

Systems and methods are provided for monitoring health of a process control system (16). The system includes a device configured to receive diagnostic alarm data that relates to the health of the process control system (16), group the diagnostic alarm data into a plurality of groups, and identify a problem associated with each group of diagnostic alarm data in the plurality of groups.

## Description

The subject matter disclosed herein relates to process control systems and, more specifically, to monitoring the health of a process controller.

Control systems are often used in conjunction with process systems, such as manufacturing or production processes, to regulate and/or monitor various operating parameters of the process. For instance, a control system may regulate the values of certain input parameters of the process in order to drive one or more target output parameters (e.g., flow rate, power output, etc.) to a desired value. Some control systems may also provide process data to an operator in the form of visual feedback, such as by outputting certain selected data points through a human-machine interface (HMI), which may include a graphical user interface displayed using a display device. This may enable the operator to monitor and assess the process performance parameters in substantially real time and, if necessary, take corrective actions if certain parameters are deviating from an expected range or norm.

Such control systems may use process controllers for controlling system operations, and the process controllers may include a combination of hardware and software components. As may be appreciated, components of the process controller may not function as anticipated. Therefore, the components of the process controller may be monitored to identify potential problems that may occur. The monitoring system may provide alarm data (e.g., diagnostic alarm messages) to an operator to notify the operator about the potential process controller problems. However, such monitoring systems may provide large amounts of data that can be difficult to interpret. Further, the alarm data may include false alarms or repeating alarms that make it hard to determine where real problems are occurring. Still further, the alarm data may require a human operator to decipher multiple signals to determine an actual problem.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system is provided for monitoring health of a process control system. The system includes a device configured to receive diagnostic alarm data that relates to the health of the process control system, group the diagnostic alarm data into a plurality of groups, and identify a problem associated with each group of diagnostic alarm data in the plurality of groups.

In a second embodiment, an article of manufacture is provided for a health monitoring system. The article of manufacture includes one or more tangible, machine-readable media having encoded thereon processor-executable instructions having instructions to receive diagnostic alarm data that relates to the health of the process control system, instructions to group the diagnostic alarm data into a plurality of groups, and instructions to identify a problem associated with each group of diagnostic alarm data in the plurality of groups.

In a third embodiment, a method is provided for monitoring health of a process control system. The method includes receiving diagnostic alarm data that relates to the health of the process control system, grouping the diagnostic alarm data into a plurality of groups, and identifying a problem associated with each group of diagnostic alarm data in the plurality of groups.

These and other features, aspects, and advantages of the present invention will become better understood when the following detailed description is read with reference to the accompanying drawings in which like characters represent like parts throughout the drawings, wherein:
FIG. 1 illustrates a block diagram of an embodiment of a process controller health monitoring system;
FIG. 2 illustrates a flow chart of an embodiment of a method for monitoring the health of a process controller; and
FIG. 3 illustrates a flow chart of an embodiment of a method for resolving health issues of a process controller using a health monitoring system.
FIG. 4 illustrates a flow chart of an embodiment of a method for identifying health issues (e.g., problems) of a process controller using a health monitoring system;
FIG. 5 illustrates a flow chart of an embodiment of a method for identifying solutions for health issues (e.g., problems) of a process controller using a health monitoring system;
FIG. 6 illustrates a flow chart of an embodiment of a method for grouping diagnostic alarm data based on relationships using a health monitoring system;
FIG. 7 illustrates a flow chart of an embodiment of a method for identifying and prioritizing possible health issues (e.g., problems) relating to each group of diagnostic alarm data using a health monitoring system;
FIG. 8 illustrates a flow chart of an embodiment of a method for identifying and prioritizing possible solutions for health issues (e.g., problems) relating to each group of diagnostic alarm data using a health monitoring system; and
FIG. 9 illustrates a schematic of an embodiment of a user interface for viewing and selecting alarm groups, problems for each group, and solutions for each group based on the methods of FIGS. 4-8.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Further, the term "client" may refer to a computer (e.g., a processor and storage that allows execution and storage of machine-readable instructions to provide the functionality described herein) and/or computer processes running on such computers.

The disclosed embodiments relate to systems and methods for monitoring and improving health of a process controller (e.g., whether components of the process controller are functioning properly), such as an industrial process controller in an industrial system. For example, the disclosed embodiments may be used to monitor and improve health of N-level redundant process controllers, wherein N is equal to 1, 2, 3, 4, 5, or more. In certain embodiments, the process controllers may be triple modular redundant (TMR) process controllers, such as Mark™ VIe controllers running ControlST software, made by General Electric Company of Schenectady, New York. These N-level redundant process controllers may be used in various industrial systems, such as turbine systems, power generation systems, power distribution systems (e.g., for an electrical power grid), gas processing systems, chemical production systems, gasification systems, industrial automation systems, power plants, or any other suitable industrial system. Furthermore, these N-level redundant controllers may be used with specific equipment, such as gas turbines, steam turbines, gasifiers, compressors, boilers, furnaces, heat recovery steam generators (HRSGs), air separation units (ASUs), acid gas removal (AGR) units, carbon capture units, motorized machinery, or any combination thereof. Accordingly, the health of these process controllers may be particularly important for maintaining the operation of these systems and equipment, because the efficiency and continuous operation of these systems and equipment may affect services such as power distribution to an electrical power grid.

In certain embodiments discussed in detail below, the health monitoring systems include a device (e.g., computer and/or computer processes running on computers) in the system that receives diagnostic alarm data that relates to the health of the process controller. The device may include components (e.g., software and/or hardware) that filter the diagnostic alarm data based on a set of rules resulting in a limited set of diagnostic alarm data (e.g., false alarm data removed, duplicate alarm data removed, etc.). The device may include components (e.g., software and/or hardware) that validate the diagnostic alarm data based on a set of rules resulting in a limited set of diagnostic alarm data (e.g., invalid alarms removed). The device may include components (e.g., software and/or hardware) that group the diagnostic alarm data based on a set of rules resulting in one or more groups of diagnostic alarm data (e.g., based on logical or other relationships). The device may include components (e.g., software and/or hardware) that identify and prioritize problems associated with each group of diagnostic alarm data based on known problem data, an analysis of characteristics of diagnostic alarm data, user defined problem data, rules, predictive models, knowledge based data, or any combination thereof. The device may include components (e.g., software and/or hardware) that identify and prioritize solutions for each problem associated with each group of diagnostic alarm data based on known solution data, an analysis of characteristics of diagnostic alarm data, user defined solution data, rules, predictive models, knowledge based data, or any combination thereof. The device may also output information or notifications pertaining to the diagnostic alarm data, groups, problems, and solutions to a user interface, either locally or remotely, to enable viewing and selection of an appropriate solution. For example, the user interface may be displayed on a display screen, such that a user can view a prioritized list of possible solutions for each problem associated with each group. In this manner, the disclosed embodiments may effectively process the diagnostic alarm data to identify symptoms indicative a common health issue (e.g., problem) with the process controller, and then propose a solution based on historical data, knowledge based data, models, heuristics, and so forth. Thus, the disclosed embodiment may substantially improve the process of diagnosing and correcting problems with the process controller, thereby helping to maintain continuous operation, efficiency, and performance of the process controller.

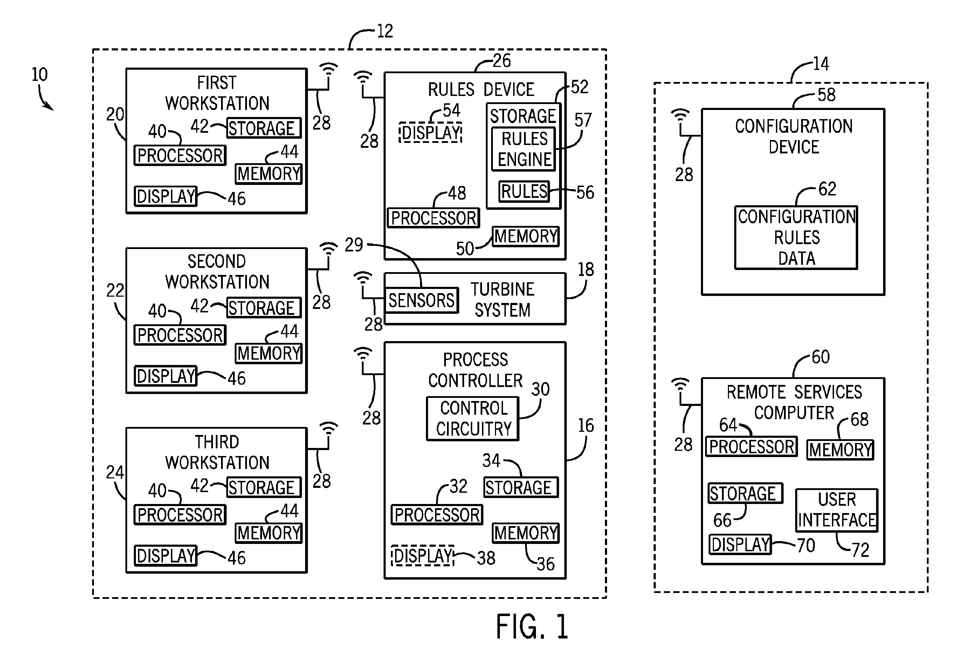

With the foregoing in mind, FIG. 1 illustrates a block diagram of an embodiment of a process controller health monitoring system 10. As illustrated, the health monitoring system 10 includes a utility plant system 12 having an on-site monitoring portion (e.g., physically located near a process controller 16) and a remote monitoring portion 14 (e.g., physically located remote from the process controller 16) for monitoring the health of the process controller 16. Specifically, the utility plant system 12 includes a process, such as operation of a turbine system 18, which is controlled by the process controller 16. Further, the utility plant system 12 includes a first workstation 20, a second workstation 22, and a third workstation 24 that each communicate with the process controller 16 and receive broadcast data from the process controller 16. As may be appreciated, the broadcast data may include information about the processes being performed, as well as diagnostic alarm data that relates to the health of the process controller 16. The utility plant system 12 also includes a rules device 26 (e.g., on-site monitoring portion) that receives diagnostic alarm data from one or more of the workstations 20, 22, and 24. The rules device 26 filters the diagnostic alarm data and provides the filtered data to the remote monitoring portion 14. As illustrated, the process controller 16, the turbine system 18, the workstations 20, 22, and 24, and the rules device 26 include a wireless antenna 28 for wireless communications. In other embodiments, the process controller 16, the turbine system 18, the workstations 20, 22, and 24, and the rules device 26 may communicate using a wired system or a combination of a wireless and a wired system.

In the illustrated embodiment, the turbine system 18 includes sensors 29 which provide feedback relating to the operation of the turbine system 18. The process controller 16 receives data from the sensors 29 and may also control the operation of the turbine system 18 (e.g., gas turbine system, steam turbine system, etc.). However, as may be appreciated, the process controller 16 may control any suitable type of process. For example, the process controller 16 may control operation of a utility system, a manufacturing plant, a boiler system, a water treatment system, a blowout preventer system (e.g., in a drilling system), and so forth. The process controller 16 operates using control circuitry 30 which may include various components. For example, the control circuitry 30 may include one or more controllers, printed circuit boards, switches, cables, or any suitable electronic component.

In addition, the process controller 16 includes a processor 32, storage 34, memory 36, and may include a display 38. Each of these devices may include hardware elements (including circuitry), software elements (including computer code stored on a computer-readable medium) or a combination of both hardware and software elements. It should be noted that the process controller 16 is merely one example of a particular implementation and is intended to illustrate the types of components that may be present in the process controller 16. It should also be noted that the processor 32 and/or other data processing circuitry may be generally referred to herein as "data processing circuitry." This data processing circuitry may be embodied wholly or in part as software, firmware, hardware, or any combination thereof. Furthermore, the data processing circuitry may be a single contained processing module or may be incorporated wholly or partially within any of the other elements within the process controller 16.

The processor 32 and/or other data processing circuitry may be operably coupled with the nonvolatile storage 34 and the memory 36 to execute instructions. Such programs or instructions executed by the processor 32 may be stored in any suitable article of manufacture that includes one or more tangible, computer-readable media at least collectively storing the instructions or routines, such as the nonvolatile storage 34 and the memory 36. The nonvolatile storage 34 and the memory 36 may include any suitable articles of manufacture for storing data and executable instructions, such as random-access memory, read-only memory, rewritable flash memory, hard drives, and optical discs. The display 38 may be any type of display for showing information, such as any device that may depict the status of processes being controlled by the process controller 16.

The control circuitry 30 and/or the processor 32 of the process controller 16 monitor the health of the components of the process controller 16. As such, the process controller 16 provides broadcast data that includes process controller 16 health data (e.g., data that may indicate a problem with a component of the process controller 16) as well as other process control data (e.g., data relating to the operation of the processes being controlled).

The workstations 20, 22, and 24 are configured to receive the broadcast data from the process controller 16 and to process and/or display portions of the broadcast data that relate to the particular workstation 20, 22, and 24 (e.g., the workstations 20, 22, and 24 may extract portions of the broadcast data, such as process controller 16 health data). To accomplish this, the workstations 20, 22, and 24 each include a processor 40, storage 42, memory 44, and a display 46. Further, the workstations 20, 22, and 24 may include a human machine interface (HMI) for an operator to use for displaying the broadcast data and/or communicating with the process controller 16. As may be appreciated, the process controller 16 health data (i.e., diagnostic alarm data) may be displayed by the workstations 20, 22, and 24. However, the process controller 16 health data may be presented in a format that makes the data hard to understand. Further, there may be large amounts of process controller 16 heath data which makes the data difficult to sort through and diagnose. For example, the process controller 16 health data may be presented with other broadcast data (e.g., data relating to the process being controlled) and the other broadcast data may appear to be more important to an operator. Therefore, in certain situations, the operator may ignore the process controller 16 health data because of these or other difficulties.

To decrease the amount of process controller 16 health data (i.e., diagnostic alarm data) and make the data easier to analyze, the diagnostic alarm data is sent to the rules device 26 for filtering. In certain embodiments, the rules device 26 receives diagnostic alarm data from the process controller 30. However, in other embodiments, the rules device 26 may receive diagnostic alarm data from one of the workstations 20, 22, and 24. Like the workstations 20, 22, and 24, the rules device 26 includes a processor 48, memory 50, storage 52, and may include a display 54. As may be appreciated, the processors 40 and 48, storage devices 42 and 52, memory 44 and 50, and displays 46 and 54 of the workstations 20, 22, and 24, and the rules device 26 may function in a similar manner to the respective components of the process controller 16 described above.

As illustrated, the storage 52 of the rules device 26 may include rules 56 that are used to filter, group, identify health issues (e.g., problems) in each group, and identify solutions for each problem in each group relating to the diagnostic alarm data (e.g., using thresholds, algorithms, or other logic). Further, the storage 52 may include a rules engine 57 which is used to receive diagnostic alarm data, filter the diagnostic alarm data based on the rules 56, group the diagnostic alarm data based on the rules 56, identify at least one problem for each group of diagnostic alarm data based on the rules 56, identify at least one solution for each problem in each group of diagnostic alarm data based on the rules 56, and output data or notification pertaining to the groups, problems, and solutions.

The rules engine 57 (e.g., based on rules 56) may be configured to filter the diagnostic alarm data to produce a filtered or limited diagnostic alarm data, which may be limited to actionable diagnostic alarm data (e.g., data that can be used to take corrective action). It should be noted that, in certain embodiments, the storage 52 of the rules device 26 may include software for collecting or extracting data from the broadcast data of the process controller 30. In addition, in certain embodiments, the filtered diagnostic alarm data may be provided to the remote monitoring portion 14 where the filtered diagnostic alarm data may be analyzed. As may be appreciated, the rules 56 may include any suitable filtering rules that can be used to filter the diagnostic alarm data. For example, the rules 56 may include rules for filtering the diagnostic alarm data based on: a frequency that diagnostic alarm data is repeated (e.g., the rules may filter out diagnostic alarm data for an alarm that repeats more often than one time per minute, hour, day, week, etc.), a state of the process controller (e.g., startup, shutdown, normal operation, unknown), a group associated with the diagnostic alarm data (e.g., alarm data from a specific controller, alarm data that relates to certain types of components, alarm data that relates to a certain time period, a newly occurring alarm), a type of process controller being monitored (e.g., analog, digital), a feature related to a history of the diagnostic alarm data (e.g., a time that an alarm occurs, a recurring diagnostic alarm, an alarm that has previously been provided to the remote monitoring portion 14), whether the alarm is actionable (e.g., whether there is a resolution for the problem causing the alarm), and an expected alarm within the diagnostic alarm data (e.g., a known recurring alarm, a false alarm).

The rules engine 57 (e.g., based on rules 56) may be configured to group the diagnostic alarm data to produce a plurality of groups diagnostic alarm data, which may be grouped based on various logical or other relationships. Furthermore, the rules engine 57 (e.g., based on rules 56) may be configured to identify problems and solutions for each group of the diagnostic alarm data, which may substantially improve diagnostics and health of the process controller 16 by reducing the amount of user analysis to troubleshoot various problems. For example, the rules engine 57 may be configured to group, identify problems, and identify solutions relating to the diagnostic alarm data based on knowledge based rules 56 detailing expert knowledge on the workings and configurations of the process controller 16, the turbine system 18, as well as knowledge useful in making deductions or predictions on the correlations between different diagnostic alarm data. By further example, the rules engine 57 may include expert system rules 56 (e.g., forward chained expert system, backward chained expert system), regression models (e.g., linear regression, nonlinear regression), recursive rules (e.g., Prolog rules), dynamic logic rules (e.g., modal logic), neural network rules, genetic algorithm rules, fuzzy logic models (e.g.., predictive fuzzy logic models), and other predictive models (e.g., Markov chain models, Bayesian models, support vector machine models) that may be used to predict the correlations between various diagnostic alarm data, possible problems, and possible solutions relating to undesired maintenance events (e.g., failure of a power supply, failure of a processor core, failure of an input/output [I/O] pack, insufficient memory, loose bus connection) related to the process controller 16. By further example, the rules engine 57 may be configured to group, identify problems, and identify solutions relating to the diagnostic alarm data based on "if ... then ..." rules 56 with the "if" portion set as an antecedent condition, and the "then" portion set as a consequent of the antecedent condition. Furthermore, the rules 56 may be derived through consultation with one or more experts in the field, such as a controller system health experts, or automatically, such as by using machine learning techniques (e.g., reinforcement learning, decision tree learning, inductive logic programming, neural network training, clustering, support vector machine).

The rules device 26 may receive the rules 56 as part of site configuration data that one or more of the workstations 20, 22, and 24 provide to the rules device 26. Further, in certain embodiments, the rules device 26 may receive the rules 56 as part of site configuration data from another source, such as from another portion of the rules device 26. Specifically, the site configuration data may include specific rules that apply to a specific process controller 16 being monitored and/or to a specific location of the process controller 16.

The remote monitoring portion 14 is used to transmit configuration data to the rules device 26 and to receive diagnostic alarm data (e.g., filtered, grouped, and correlated with respective problems and solutions) from the rules device 26. Specifically, the remote monitoring portion 14 includes a configuration device 58 and one or more remote services computers 60. Further, the configuration device 58 includes configuration rules data 62, which the configuration device 58 transmits to the rules device 26. For example, the filtering rules 56 of the rules device 26 may include a combination of the configuration rules data 62 from the configuration device 58 and the rules from the site configuration data to form a combined set of rules 56 for filtering diagnostic alarm data. In certain embodiments, the configuration rules data 62 may include generic filtering rules that apply to diagnostic alarm data from any process controller 16 at any location (e.g., the filtering rules apply to multiple process controllers 16). Likewise, the configuration rules data 62 may include various data grouping or classifying rules 56, problem identification rules 56, and solution identification rules 56 that are either generic for all process controllers 16, tailored to particular classes or types of controllers 16, or tailored to an individual controller 16 or industrial system using the controller 16.

The remote services computer 60 receives diagnostic alarm data (e.g., filtered, grouped, and correlated with respective problems and solutions) from the rules device 26. Specifically, the remote service computer 60 includes a processor 64, storage 66, memory 68, and a display 70 for receiving and displaying the diagnostic alarm data (e.g., filtered, grouped, and correlated with respective problems and solutions) received from the rules device 26. As may be appreciated, the processor 64, the storage 66, the memory 68, and the display 70 may function in a similar manner to the respective components of the process controller 16 described above. The remote services computer 60 also includes a user interface 72 which may enable an operator to interact with the remote services computer 60 (e.g., view diagnostic alarm data as filtered, grouped, and correlated with respective problems and solutions). As illustrated, the configuration device 58 and the remote service computer 60 include the wireless antenna 28 for wireless communications. In other embodiments, the configuration device 58 and the remote service computer 60 may communicate using a wired system or a combination of a wireless and a wired system. As may be appreciated, the components of the utility plant system 12 may communicate with the components of the remote monitoring portion 14.

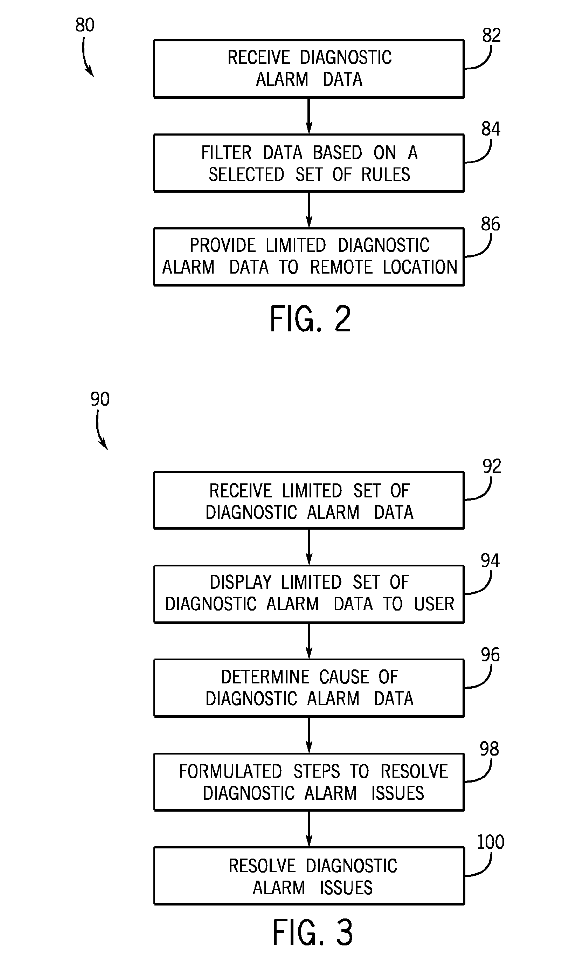

FIG. 2 illustrates a flow chart of a method for monitoring the health of a process controller 80 using the monitoring system 10 described in FIG. 1. During operation of the monitoring system 10, the process controller 16 broadcasts data that includes diagnostic alarm data (e.g., health data relating to components of the process controller 16). The workstations 20, 22, and 24 may extract data from the broadcast data based on the particular purpose and/or configuration of the workstation 20, 22, or 24 receiving the data. For example, one workstation 20, 22, or 24 may be used to monitor the operation of a combustion chamber of the turbine system 18 and, therefore, may extract data from the broadcast data that relates to the combustion chamber of the turbine system 18. As another example, another workstation 20, 22, or 24 may be used to monitor the operation of turbines within the turbine system 18 and, therefore, may extract data from the broadcast data that relates to the operation of turbines of the turbine system 18. Further, the workstations 20, 22, and 24 may extract diagnostic alarm data from the broadcast data. The workstations 20, 22, and 24 may use an HMI to display graphics relating to the process being controlled, control options, and alarms that relate to the process being controlled. Further, the alarms may include diagnostic alarm data that relates to the health of components within the process controller 16. In certain situations, an operator may not know how to respond to diagnostic alarm data that appears on the display of one of the workstations 20, 22, and 24. Further, there may be large amounts of diagnostic alarm data. For example, the diagnostic alarm data may include alarm data that repeats at a high frequency. Therefore, the workstations 20, 22, and 24 provide the diagnostic alarm data to the rules device 26.

At block 82, the rules engine 57 of the rules device 26 receives the diagnostic alarm data from the workstations 20, 22, and 24. As may be appreciated, in certain embodiments, the rules engine 57 may be configured to receive the diagnostic alarm data directly from the process controller 16, or from some other device, such as another device within the rules device 26. In other embodiments, the rules engine 57 may be directly built into the process controller 16. Next, at block 84, the rules engine 57 filters the diagnostic alarm data based on a selected set of rules 56. As previously described, the rules device 26 may receive the rules 56 from site configuration files provided to the rules device 26 by the workstations 20, 22, and 24, and/or the rules device 26 may receive the rules 56 from the configuration device 58. As may be appreciated, the rules device 26 may receive the rules 56 from another suitable source. Some or all of the rules 56 may be selected and applied to the diagnostic alarm data received by the rules engine 57. The rules 56 may apply any suitable logic to filter the diagnostic alarm data, as described above. At block 86, the rules engine 57 provides a limited or filtered set of diagnostic alarm data to a remote location (e.g., the remote monitoring portion 14 or the remote services computer 60). It should be noted that data may be transmitted and/or received by the various devices in the system 10 as the data is produced (e.g., not stored for later analysis, substantially real time). Further, the rules engine 57 may apply the rules 56 to the diagnostic alarm data as the engine 57 receives the data. Likewise, the filtered or limited diagnostic alarm data (e.g., actionable diagnostic alarm data) may be transmitted to the remote services computer 60 as soon as it has been filtered.

FIG. 3 illustrates a flow chart 90 of a method for resolving health issues of a process controller using the process controller health monitoring system 10 described in FIG. 1. At block 92, the remote services computer 60 receives the limited or filtered set of diagnostic alarm data. Then, at block 94, the remote services computer 60 displays the limited or filtered set of diagnostic alarm data (e.g., actionable diagnostic alarm data) to a user or operator. Because the diagnostic alarm data has been filtered, there may be a significantly smaller amount of data displayed to the operator relative to the amount of diagnostic alarm data that was received by the rules engine 57 prior to the filtering.

Next, at block 96, the operator determines the cause of the diagnostic alarm data. The operator may use many different resources to determine the cause of the diagnostic alarm data. For example, the operator may analyze the operation of the process at the same time that the alarm was generated, or the operator may analyze what the process controller 16 was trying to do when the alarm was generated. Further, the operator may contact personnel located where the process controller 16 is located, remotely connect to the process controller 16 (e.g., via a network connection, using a network lockbox, remote services gateway, etc.), remotely look through historic or current diagnostic alarm data stored on the process controller 16, and remotely check the status of the process controlled by the process controller 16. The operator may also utilize technology experts to determine the cause of the diagnostic alarm data. At block 98, the operator formulates steps to resolve any issues with the portion of the process controller 16 that relates to the diagnostic alarm data. Then, at block 100, the health issues of the process controller 16 are resolved (e.g., such as by modifying software configurations, replacing hardware, etc.). For example, in certain embodiments, the operator may transmit instructions and/or send hardware for resolving the health issues to personnel located where the process controller 16 is located. In other embodiments, the operator may implement steps to resolve the health issues of the process controller 16 (e.g., by modifying software settings). As may be appreciated, prior to implementing steps to resolve the health issues of the process controller 16, the operator may contact personnel located where the process controller 16 is located to notify the personnel of the steps to be used.

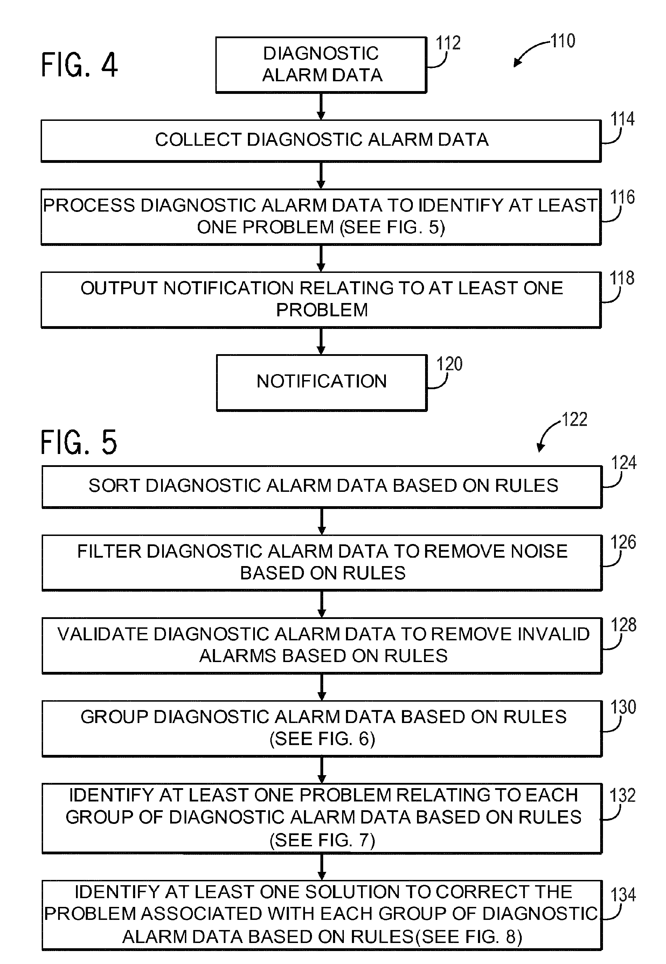

FIG. 4 illustrates a flow chart of an embodiment of a method 110 for identifying health issues (e.g., problems) of a process controller 16 using the health monitoring system 10 as described in FIG. 1. At block 114, the rules engine 57 of the rules device 26 receives or collects diagnostic alarm data 112 from the workstations 20, 22, and 24. The data collection step 114 may occur in real-time during operation of the process controller 16, or the data 112 may be collected from historical alarm data 112, sessions of collecting the alarm data 112, or any combination thereof. Furthermore, the data collection step 114 may have a variety of sampling rates depending on the desired amount of data 112 and response time for generating notifications relating to the diagnostic data 112.

As may be appreciated, in certain embodiments, the rules engine 57 may be configured to receive the diagnostic alarm data 112 directly from the process controller 16, or from some other device, such as another device within the rules device 26. In other embodiments, the rules engine 57 may be directly built into the process controller 16. As discussed in detail above, during operation of the monitoring system 10, the process controller 16 broadcasts data that includes diagnostic alarm data 112 (e.g., health data relating to components of the process controller 16). The workstations 20, 22, and 24 may extract data from the broadcast data based on the particular purpose and/or configuration of the workstation 20, 22, or 24 receiving the data. For example, one workstation 20, 22, or 24 may be used to monitor (and extract data from the broadcast data relating to) the operation of one or more components of the turbine system 18 (e.g., steam and/or gas turbine), gasifier, gas treatment system, compressor, boiler, furnace, air separation unit, electrical generator, or any combination thereof. Further, the workstations 20, 22, and 24 may extract diagnostic alarm data 112 from the broadcast data, wherein the diagnostic alarm data 112 relates to the process being controlled and the health of components within the process controller 16. In certain situations, an operator may not know how to respond to diagnostic alarm data that appears on the display of one of the workstations 20, 22, and 24. Further, there may be large amounts of diagnostic alarm data. Therefore, in block 114, the rules engine 57 of the rules device 26 collects the diagnostic alarm data 112 from the workstations 20, 22, and 24.

In certain embodiments, the rules engine 57 of the rules device 26 collects 114 diagnostic alarm data 112 during sessions of passive listening, i.e., without interfering with control system operation. During the sessions, diagnostic alarm data 112 may be simultaneously collected and extracted; the extracted data being sent to the rules device 26 and/or the remote service computer 60. Passive listening allows collection 114 of critical alarms for comprehensive diagnostic purposes, while still allowing them to be handled expediently at the time they are generated. In one embodiment of passive listening, diagnostic alarm data 112 is collected 114 through consecutive sessions of user-defined or preset intervals. For example, the rules engine 57 of the rules device 26 may collect diagnostic alarm data 112 for a session of approximately 1 to 24, 2 to 16, 3 to 12, or 4 to 8 hours before closing the session with the controller 16. These sessions of data collection 114 may be well suited for lower priority diagnostic alarm data 112, e.g., wherein any problems may be addressed at a later time. The rules engine 57 of the rules device 26 may continue running sessions until a user intervenes or all the sessions in the queue have completed. By further example, the rules engine 57 of the rules device 26 may collect diagnostic alarm data 112 during certain events, such as an installation or replacement of a component, a critical event that may warrant an immediate analysis and troubleshooting, or any other time. For example, in certain embodiments, the data collection 112 may occur in real-time during operation of the process controller 16, particularly for diagnostic alarm data 112 of a higher priority or criticality.

At block 116, the rules engine 57 processes the diagnostic alarm data 112 to identify at least one problem based on a selected set of rules 56. As appreciated, the processing step 116 may occur at a time delay after data collection 114 (e.g., after an 8 hour session of data collection 114), or the processing step 116 may occur substantially immediately (e.g., in real-time) as the diagnostic alarm data 112 is collected by the system 10. As previously described, the rules device 26 may receive the rules 56 from site configuration files provided to the rules device 26 by the workstations 20, 22, and 24, and/or the rules device 26 may receive the rules 56 from the configuration device 58. As may be appreciated, the rules device 26 may receive the rules 56 from another suitable source. Some or all of the rules 56 may be selected and applied to the diagnostic alarm data 112 received by the rules engine 57. The rules 56 may apply any suitable logic to filter, validate, and group the diagnostic alarm data 112, as described below. Furthermore, the rules 56 may apply any suitable logic to identify at least one problem for each group of the diagnostic alarm data 112, as well as identify at least one solution for each problem. Further, the rules engine 57 may apply the rules 56 to the diagnostic alarm data 112 as the engine 57 receives the data 112. As discussed above, the process 110 may be used to identify the at least one problem (block 116) based on various rules 56, such as knowledge based rules, expert system rules, regression models, recursive rules, dynamic logic rules, neural network rules, genetic algorithm rules, fuzzy logic models, predictive models, "if ... then ..." rules, or any combination thereof.

After problems are identified at block 116, the process 110 may then output one or more notifications 120 relating to the at least one problem (block 118), e.g., to an on-site or off-site location where appropriate action may be taken. For example, the diagnostic alarm data 112 (e.g., subject to processing 116) and identified problems may be transmitted to the remote services computer 60 upon completion of the processing 116. The notifications 120 may include a list of problems and suggested solutions (e.g., actions) that may solve the problems identified from processing 116 the diagnostic alarm data 112. For example, the notifications 120 may further prioritize the list of problems in an order of criticality or urgency, while also prioritizing the list of solutions in an order of relevancy, probability of correcting the problem, or the like. In this manner, the notifications 120 substantially improve the user's ability to analyze and respond to the diagnostic alarm data 112, thereby helping to increase health, maintain continuous operation, and improve performance and/or efficiency of the process controller 16 and the industrial system (e.g., turbine system 18).

FIG. 5 illustrates a flow chart of an embodiment of a method 122 for identifying solutions for health issues (e.g., problems) of a process controller 16 using the health monitoring system 10 as described in FIG. 1, further illustrating the processing block 116 of FIG. 4. At block 124, the rules engine 57 of the rules device 26 sorts the diagnostic alarm data 112 from the workstations 20, 22, and 24 based on the rules 56 (e.g., sorting rules). For example, the sorting rules 56 may be configured to sort the diagnostic alarm data 112 based on a time stamp, an alarm name, an alarm identifier or code, an alarm source, a description, or any other data field of the diagnostic alarm data 112. By further example, the sorting rules 56 may simply sort the diagnostic alarm data 112 in a sequential order of time stamps or an alphabetic order of alarm names.

At block 126, the rules engine 57 of the rules device 26 filters the diagnostic alarm data 112 from the workstations 20, 22, and 24 based on the rules 56 (e.g., filtering rules), as discussed in detail above with reference to FIGS. 1-3. For example, the rules engine 57 may filter out noise, such as duplicate or "chattering" alarms, inactive or reset alarms, alarms resulting from intentional human interaction with the control system, alarms resulting from interference by high frequency switching or electromagnetic interference, or any combination thereof. By further example, the rules 56 may be configured to filter "chattering alarms" by measuring the number of times the alarm changed state in a particular frame of time. If the number exceeds a pre-set rate, the entire set may be ignored based on the rules 56. Furthermore, alarms caused by high frequency switching or electromagnetic interference in the system may be eliminated through adjustment to the sampling rate and/or delays.

At block 128, the rules engine 57 of the rules device 26 validates the diagnostic alarm data 112 from the workstations 20, 22, and 24 based on the rules 56 (e.g., validation rules), thereby removing any invalid alarms. In certain embodiments, the validation step 128 may check a variety of parameters, such as an alarm condition and an alarm source, to ensure that the alarm is valid. For example, the rules engine 57 may perform the validation step 128 by analyzing log files, internal sensor feedback, usage of resources (e.g., processor, memory, paging files, etc.), or any combination thereof, of the process controller 16. As noted above, the rules engine 57 may validate the diagnostic alarm data 112 via analysis of alternative alarm sources, such as other controllers of a redundant controller 16. For example, in a triple modular redundant (TMR) controller 16, the validation step 128 may evaluate diagnostic alarm data 112 provided by controllers R, S, and T, each relating to the same problem. However, the diagnostic alarm data 112 may represent a problem with only one controller (e.g., R controller) rather than the other controllers (e.g., S and T controllers), and thus the validation step 128 may validate only the alarm directly relating to the R controller while not validating the alarm data 112 relating to the S and T controllers. Alternatively, the set of diagnostic alarm data 112 from the three controllers (e.g., R, S, and T) may be used to validate one another, rather than eliminating the alarm data 112 originating from controllers S and T. One example would be a communication loss with the R controller, which would result in communication related alarms in the R, S, and T controllers. As also noted above, the rules engine 57 may validate the diagnostic alarm data 112 via analysis of the alarm condition (if possible). For example, if the alarm condition relates to other alarms, then it may be possible to validate the diagnostic alarm data in view of the presence or absence of related alarms. One example includes a communication break due to a power loss to the IO pack, which may result in alarms related to the voltage drop by the IO pack monitoring power supply. The rules engine 57 is configured to eliminate any diagnostic alarm data 112 that does not correspond to an actual problem suitable for corrective action (e.g., false alarms).

At block 130, the rules engine 57 of the rules device 26 groups the diagnostic alarm data 112 from the workstations 20, 22, and 24 based on the rules 56 (e.g., grouping or classifying rules), thereby creating a plurality of groups based on logical or other relationships. As discussed above, the groups are generated by the grouping step 130 based on various rules 56, such as knowledge based rules, expert system rules, regression models, recursive rules, dynamic logic rules, neural network rules, genetic algorithm rules, fuzzy logic models, predictive models, "if ... then ..." rules, or any combination thereof. For example, each group may be defined by one or more common characteristics in the diagnostic alarm data 112, such as a source or origination of the diagnostic alarm data 112, a type of the diagnostic alarm data 112, a code or identifier of the diagnostic alarm data 112, or any combination thereof. As appreciated, the knowledge based rules 56 may include known logical or other relationships between different alarms, alarms and components of the process controller 16, and so forth, based on experience or knowledge (e.g., of experts) relating to the controller 16 and/or the system 10. The rules 56 may also include historical data relating to alarms, including correlations between the diagnostic alarms and operational parameters, problems, solutions, etc. relating to the process controller 16 and/or the system 10. Furthermore, the rules engine 57 may be configured to learn or intelligently develop groupings of diagnostic alarms based on historical data, knowledge based data, statistical analysis, user input, and so forth. In certain embodiments, the rules engine 57 may store and/or generate a list of reference groups of logically related diagnostic alarms, e.g., akin to symptoms of one or more common health issues (e.g., problems). These reference groups may be used to group the diagnostic alarm data 112. However, any suitable rules 56 may be used to group the diagnostic alarm data 112 in a logical manner to facilitate the process 122 of identifying solutions for health issues (e.g., problems) of the process controller 16. For example, the relationships may be based on master-slave relationships, component-subcomponent relationships, cause-effect relationships, operating relationships, hardware-software relationships, and so forth.

At block 132, the rules engine 57 of the rules device 26 identifies at least one health issue (e.g., problem) relating to each group of the diagnostic alarm data 112 from the workstations 20, 22, and 24 based on the rules 56 (e.g., problem identification rules), thereby generating a list of possible problems. As discussed above, the health issues (e.g., problems) are identified by the step 132 based on various rules 56, such as knowledge based rules, expert system rules, regression models, recursive rules, dynamic logic rules, neural network rules, genetic algorithm rules, fuzzy logic models, predictive models, "if ... then ..." rules, or any combination thereof. For example, the logically related diagnostic alarm data 112 in each group may be akin to symptoms, which may collectively suggest at least one health issue (e.g., problem) that may be corrected by the system itself or a user. In certain embodiments, the rules engine 57 may be configured to learn or intelligently identify health issues (e.g., problems) that are logically related to certain groups of diagnostic alarms based on historical data, knowledge based data, statistical analysis, user input, and so forth. Furthermore, the rules engine 57 may be configured to predict future health issues (e.g., problems) that are logically related to certain groups of diagnostic alarms based on historical data, knowledge based data, statistical analysis, user input, and so forth. The rules engine 57 also may be configured to statistically determine a likelihood of a problem existing or occurring, a priority level of the problem, a criticality of the problem, or a relevance to other problems. For example, the rules engine 57 may use the rules 56 to provide a list of rules in an order of priority, criticality, time of occurrence, and so forth. However, as appreciated, the problem identification step 132 may rely on a variety of rules 56 to identify one or more health issues (e.g., problems) for each group of diagnostic alarm data 112.

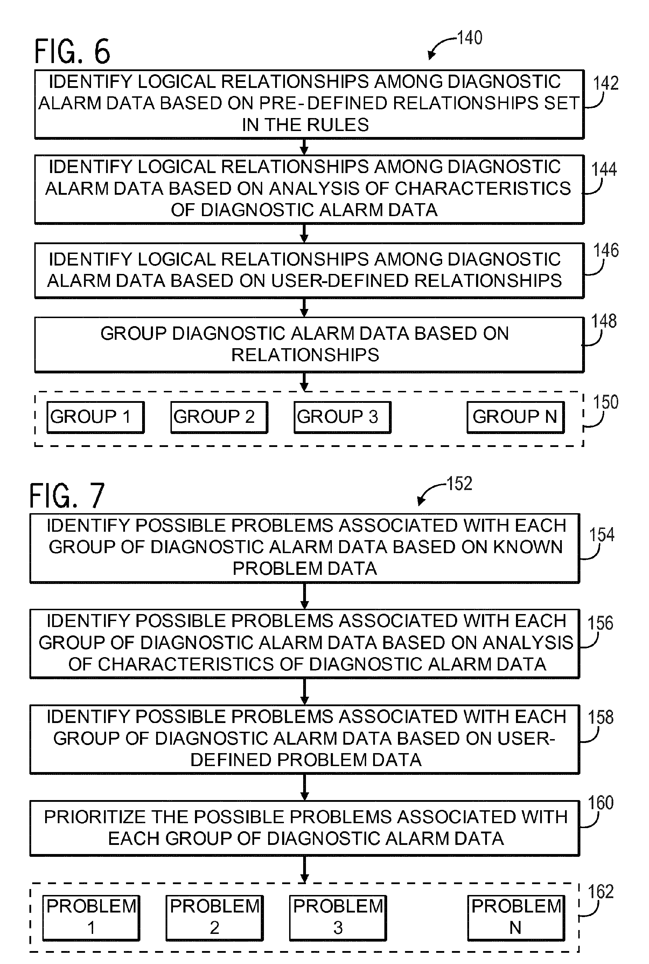

At block 134, the rules engine 57 of the rules device 26 identifies at least one solution (e.g., treatment) to correct the health issue (e.g., problem) relating to each group of the diagnostic alarm data 112 from the workstations 20, 22, and 24 based on the rules 56 (e.g., solution identification rules), thereby generating a list of possible solutions (e.g., treatments). As discussed above, the solutions (e.g., treatments) are identified by the step 134 based on various rules 56, such as knowledge based rules, expert system rules, regression models, recursive rules, dynamic logic rules, neural network rules, genetic algorithm rules, fuzzy logic models, predictive models, "if ... then ..." rules, or any combination thereof. For example, the rules engine 57 may identify and prioritize the solutions based on a likelihood of success, relevance to the problem, and so forth. Thus, as illustrated in FIG. 6, the process 122 is able to reduce the amount of diagnostic data 112 via filtering 126 and validation 128, group 130 the data 112 into logical groups, and then identify problems 132 and solutions 134 for each group. The process 122 takes advantage of the various rules 56 to more efficiency and accurately identify solutions, thereby reducing delays in correcting the problems.

FIG. 6 illustrates a flow chart of an embodiment of a method 140 for grouping diagnostic alarm data 112 based on relationships using the health monitoring system 10 of FIG 1, furthering illustrating the grouping step 130 of FIG. 5. At block 142, the rules engine 57 identifies logical or other relationships among the diagnostic alarm data 112 based on pre-defined relationships programmed specifically in the rules 56. The pre-defined relationships may be based on knowledge and experience of experts; design specifications, operating parameters, and known relationships relating to the hardware; design specifications, operating parameters, and known relationships relating to the software; relationships set by the manufacturer; or any combination thereof. These pre-defined relationships may relate to the process controller 16, the system 10, or any related industrial software and/or hardware components, such as the turbine system 18, a gasification system, a gas treatment system, a compressor, a boiler, a furnace, a heat recovery steam generator (HRSG), or any combination thereof.

At block 144, the rules engine 57 identifies logical or other relationships based on an analysis of characteristics of the diagnostic alarm data 112. For example, as discussed above, the rules engine 57 may compare the diagnostic alarm data 112 against historical data, knowledge based data, trends in the diagnostic alarm data 112, and various information contained with each alarm in the diagnostic alarm data 112. In particular, each alarm of the diagnostic alarm data 112 may include a plurality of properties, such as an alarm state, an alarm type, an alarm source, an alarm name, an alarm description, an alarm priority, or any other aspect. Each of these properties of the alarm data 112 may be used by the rules engine 57 for purposes of evaluation and identifying logical or other relationships among the alarm data 112. The rules engine 57 may use rules 56, such as predictive rules, statistical analysis rules, and so forth, to help analyze and intelligently identify the logical or other relationships.

At block 146, the rules engine 57 identifies logical or other relationships among diagnostic alarm data 112 based on user-defined relationships. For example, users may add relationships to the rules 56 based on their own knowledge, experience, and interactions with the process controller 16 and/or system 10. In this manner, the users can customize the rules 56 to facilitate grouping of the diagnostic alarm data 112. In certain embodiments, the users may be able to customize the rules 56 via certain software tools, which may also enable the user to view the diagnostic alarm data, operational data, trends, and other information, to help tailor the rules 56 (and logical or other relationships) to their specific needs and/or preferences. At block 148, the rules engine 57 groups the diagnostic alarm data 12 based on the relationships 142, 144, and 146, thereby generating groups 150. In certain embodiments, each group may include 1 to 100 or more of the diagnostic alarm data 112. Furthermore, each alarm of the diagnostic alarm data 112 may be limited to a single group, or the data 112 may appear in any number of the groups.

FIG. 7 illustrates a flow chart of an embodiment of a method 152 for identifying and prioritizing possible health issues (e.g., problems) relating to each group of diagnostic alarm data 112 using the health monitoring system 10 of FIG. 1, further illustrating the problem identification step 132 of FIG. 5. At block 154, the rules engine 57 identifies possible problems associated with each group 150 of the diagnostic alarm data 112 based on known problem data. The known problem data may be based on knowledge and experience of experts, known problems relating to the hardware, known problems relating to the software, known problems identified by the manufacturer, or any combination thereof. This known problem data may relate to the process controller 16, the system 10, or any related industrial software and/or hardware components, such as the turbine system 18, a gasification system, a gas treatment system, a compressor, a boiler, a furnace, a heat recovery steam generator (HRSG), or any combination thereof.

At block 156, the rules engine 57 identifies possible problems (e.g., health issues) based on an analysis of characteristics of the diagnostic alarm data 112. For example, as discussed above, the rules engine 57 may compare the diagnostic alarm data 112 against historical data, knowledge based data, trends in the diagnostic alarm data 112, and various information contained with each alarm in the diagnostic alarm data 112. In particular, each alarm of the diagnostic alarm data 112 may include a plurality of properties, such as an alarm state, an alarm type, an alarm source, an alarm name, an alarm description, an alarm priority, or any other aspect. Each of these properties of the alarm data 112 may be used by the rules engine 57 for purposes of evaluation and identifying possible problems among the alarm data 112. The rules engine 57 may use rules 56, such as predictive rules, statistical analysis rules, and so forth, to help analyze and intelligently identify the possible problems. For example, the rules engine 57 may effectively analyze each alarm of the diagnostic alarm data 112 as a potential symptom of a common health issue (e.g., problem), and thus the rules 56 may include a plurality of symptoms (e.g., alarms) indicative of each health issue (e.g., problem). Furthermore, the logical or other relationships used to define the groups 150 also help in identifying the possible problems. In other words, by evaluating the diagnostic alarm data 112 collectively within each group 150, the rules engines 57 may be able to more effectively and intelligently identify one or more problems relating to the process controller 16.

At block 158, the rules engine 57 identifies possible problems (e.g., health issues) among diagnostic alarm data 112 based on user-defined problem data. For example, users may add problems (or data used to identify problems) to the rules 56 based on their own knowledge, experience, and interactions with the process controller 16 and/or system 10. In this manner, the users can customize the rules 56 to facilitate the problem identification 158 within each group 150 of the diagnostic alarm data 112. In certain embodiments, the users may be able to customize the rules 56 via certain software tools, which may also enable the user to view the diagnostic alarm data, operational data, trends, and other information, to help tailor the rules 56 (and possible problems) to their specific needs and/or preferences. At block 160, the rules engine 57 prioritizes the possible problems associated with each group 150 of the diagnostic alarm data 12 based on the identified problems 154, 156, and 158, thereby generating a prioritized list or set of problems 162. For example, the problems may be prioritized according to a criticality to the health of the process controller 16, a time sensitivity to resolution (e.g., how urgent the alarm should be addressed to mitigate further problems), a time of receipt, a statistical correlation with other problems (e.g., likelihood of leading to additional problems in other areas), or any combination thereof. In certain embodiments, each set of problems 162 may include 1 to 10 or more problems associated with each group 150 of the diagnostic alarm data 112. Furthermore, each problem 162 may be limited to a single group 150, or the problem 162 may appear in any number of the groups 150.

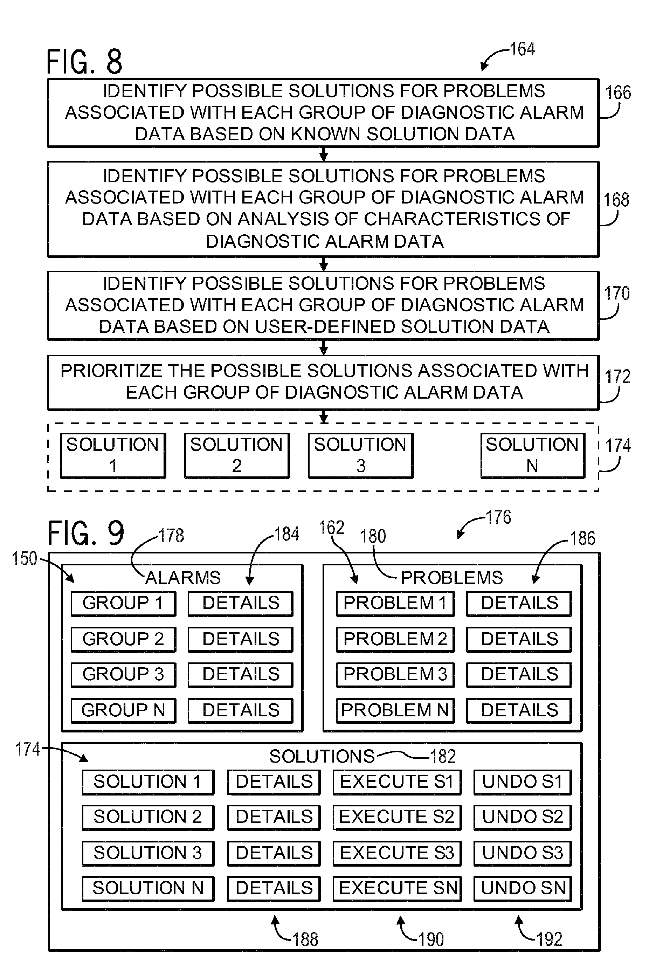

FIG. 8 illustrates a flow chart of an embodiment of a method 164 for identifying and prioritizing possible solutions for health issues (e.g., problems 174) relating to each group 150 of diagnostic alarm data 112 using the health monitoring system 10 of FIG. 1, further illustrating the solution identification step 134 of FIG. 5. At block 166, the rules engine 57 identifies possible solutions for problems 162 associated with each group 150 of the diagnostic alarm data 112 based on known solution data. The known solution data may be based on knowledge and experience of experts, known solutions relating to the hardware, known solutions relating to the software, known solutions identified by the manufacturer, or any combination thereof. This known solution data may relate to the process controller 16, the system 10, or any related industrial software and/or hardware components, such as the turbine system 18, a gasification system, a gas treatment system, a compressor, a boiler, a furnace, a heat recovery steam generator (HRSG), or any combination thereof.

At block 168, the rules engine 57 identifies possible solutions for the problems 162 (e.g., health issues) associated with each group 150 of the diagnostic alarm data 112 based on an analysis of characteristics of the diagnostic alarm data 112. For example, as discussed above, the rules engine 57 may compare the diagnostic alarm data 112 and/or the possible problems 162 against historical data, knowledge based data, trends in the data 112 and/or problems 162, and various information contained with each alarm in the diagnostic alarm data 112. In particular, each alarm of the diagnostic alarm data 112 may include a plurality of properties, such as an alarm state, an alarm type, an alarm source, an alarm name, an alarm description, an alarm priority, or any other aspect. Each of these properties of the alarm data 112 may be used by the rules engine 57 for purposes of evaluation and identifying possible solutions for the problems 162. The rules engine 57 may use rules 56, such as predictive rules, statistical analysis rules, and so forth, to help analyze and intelligently identify the possible solutions. Again, the logical or other relationships used to define the groups 150 also help in identifying the possible solutions. In other words, by evaluating the diagnostic alarm data 112 and problems 162 collectively within each group 150, the rules engines 57 may be able to more effectively and intelligently identify one or more solutions for the problems 162 relating to the process controller 16.

At block 170, the rules engine 57 identifies possible solutions for the problems 162 (e.g., health issues) associated with each group 150 of the diagnostic alarm data 112 based on user-defined solution data. For example, users may add solutions (or data used to identify solutions) to the rules 56 based on their own knowledge, experience, and interactions with the process controller 16 and/or system 10. In this manner, the users can customize the rules 56 to facilitate the solution identification 170 within each group 150 of the diagnostic alarm data 112. In certain embodiments, the users may be able to customize the rules 56 via certain software tools, which may also enable the user to view the diagnostic alarm data, operational data, trends, and other information, to help tailor the rules 56 (and possible solutions) to their specific needs and/or preferences. At block 172, the rules engine 57 prioritizes the possible solutions for problems 162 associated with each group 150 of the diagnostic alarm data 12 based on the identified problems 166, 168, and 170, thereby generating a prioritized list or set of solutions 174. For example, the solutions may be prioritized according to a statistical relevancy to the particular problem or set of problems within each group 150, a statistical success rate at solving the particular problem or set of problems within each group 150, or any other prioritization scheme. In certain embodiments, each set of solutions 174 may include 1 to 10 or more solutions for each problem 162 associated with each group 150 of the diagnostic alarm data 112. Furthermore, each solution 174 may be limited to a single group 150, or the solution 174 may appear in any number of the groups 150.

FIG. 9 illustrates a schematic of an embodiment of a user interface 176 (e.g., screen view on a display) for viewing and selecting alarm groups, problems for each group, and solutions for each group based on the methods of FIGS. 1-8. The user interface 176 includes an alarm section 178, a problem section 180, and a solutions section 182. The alarm section 178 depicts the alarms (e.g., diagnostic alarm data 112) by groups 150, as provided by the process 140 of FIG. 6, as well as details 184 for each group 150. The details 184 may include a list of diagnostic alarm data 112, trends, individual alarm properties, historical data, and so forth, for each group 150. The problem section 180 depicts the problems 162 (e.g., health issues) associated with the diagnostic alarm data 112, as provided by the process 152 of FIG. 7, as well as details 186 for each problem 162. In certain embodiments, each numbered problem 162 in the problem section 180 may correspond to one of the numbered groups 150 in the alarm section 178, or the problem section 180 may simply depict all problems 162 corresponding to a selected one of the groups 150 in the alarm section 178. The details 186 may include a problem description, a problem source, a problem type or category, a problem criticality level (e.g., high, medium, or low), or any other problem information for each problem 162. The details 186 also may correspond to a report and/or tools menu, which may enable a user to further analyze the problem 162 and/or view reports relating to the particular problem 162.

The solution section 182 depicts the solutions 174 for the problem 162 (e.g., health issues) associated with the diagnostic alarm data 112, as provided by the process 164 of FIG. 8, as well as details 188, execution options 190, and undo options 192 for each solution 174. In certain embodiments, each numbered solution 174 in the solution section 182 may correspond to one of the numbered groups 150 in the alarm section 178 and/or one of the numbered problems 162 in the problem section 180, or the solution section 182 may simply depict all solutions 174 corresponding to a selected one of the groups 150 in the alarm section 178 a selected one of the problems 162 in the problem section 180. The details 188 may include a solution description, a list of steps or changes provided by the solution, a statistical likelihood of success of the solution, a statistical relevance of the solution, or any other solution information for each solution 174. The details 188 also may correspond to a report and/or tools menu, which may enable a user to further analyze the solution 174 and/or view reports relating to the particular solution 174. Finally, the execute option 190 may initiate the execution of the particular solution 174, while the undo option 192 may initiate an undo process (if possible) for a previously executed solution 174.

Technical effects of the invention include systems and methods for processing diagnostic alarm data that relates to the health of components of the process controller 16. Filters may remove redundant, unusable, expected, invalid or other alarm data from diagnostic alarm data to make it easier to analyze. The data is then logically grouped and problems associated with each group are identified. Solutions are identified and associated with each group and problem. A user may then analyze the diagnostic alarm data, groups, problems and solutions and resolve issues that relate to the health of components of the process controller 16. Thus, the diagnostic alarms can be used more accurately and with less training for operators, thereby improving the overall health and operation of the process controller 16.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system (10), comprising:
   a device configured to:
      receive diagnostic alarm data that relates to a health of a process control system (16);
      group the diagnostic alarm data into a plurality of groups; and
      identify a problem associated with each group of diagnostic alarm data in the plurality of groups.
2. The system of clause 1, wherein the device is configured to identify relationships among the diagnostic alarm data based on pre-defined relationships, user-defined relationships, or an analysis of characteristics of the diagnostic alarm data.
3. The system of clause 1 or clause 2, wherein the device is configured to identify one or more possible problems associated with each group of diagnostic alarm data based on known problem data, user-defined problem data, or an analysis of characteristics of the diagnostic alarm data.
4. The system of any preceding clause, wherein the device is configured to analyze the diagnostic alarm data in each group to identify symptoms of a common problem affecting the health of the process control system.
5. The system of any preceding clause, wherein the device is configured to identify a plurality of possible problems associated with each group of diagnostic alarm data, and the device is configured to prioritize the plurality of possible problems.
6. The system of any preceding clause, wherein the device is configured to identify a solution for one or more problems associated with each group of diagnostic alarm data based on known solution data, user-defined solution data, or an analysis of characteristics of the diagnostic alarm data.
7. The system of any preceding clause, wherein the device is configured to identify a plurality of possible solutions for the one or more problems associated with each group of diagnostic alarm data, and the device is configured to prioritize the plurality of possible solutions.
8. The system of any preceding clause, wherein the device is configured to output a notification indicating a group of the plurality of groups of diagnostic alarm data, the problem, or a solution for the problem.
9. The system of any preceding clause, wherein the device is configured to filter the diagnostic alarm data based on a set of rules resulting in a limited set of diagnostic alarm data, and the device is configured to validate the diagnostic alarm data.
10. The system of any preceding clause, wherein the device is configured to receive the diagnostic alarm data via passive monitoring without interfering with operation of the process control system, and the device is configured to perform analysis and reporting relating to the diagnostic alarm data in real-time, at periodic intervals, or at user defined times.
11. An article of manufacture, comprising:
   one or more tangible, machine-readable media having encoded thereon processor-executable instructions comprising:
      instructions to receive diagnostic alarm data that relates to a health of a process control system;
      instructions to group the diagnostic alarm data into a plurality of groups; and
      instructions to identify a problem associated with each group of diagnostic alarm data in the plurality of groups.
12. The article of manufacture of any preceding clause, wherein the instructions to group comprise instructions to identify relationships among the diagnostic alarm data based on pre-defined relationships, user-defined relationships, or an analysis of characteristics of the diagnostic alarm data, wherein the instructions to identify the problem comprise instructions to identify one or more possible problems associated with each group of diagnostic alarm data based on known problem data, user-defined problem data, or the analysis of characteristics of the diagnostic alarm data.
13. The article of manufacture of any preceding clause, comprising instructions to identify a solution for the problem associated with each group of diagnostic alarm data based on known solution data, user-defined solution data, or an analysis of characteristics of the diagnostic alarm data.
14. The article of manufacture of any preceding clause, wherein the instructions to identify the problem comprise instructions to identify and prioritize a plurality of possible problems associated with each group of diagnostic alarm data, wherein the instructions to identify the solution comprise instructions to identify and prioritize a plurality of possible solutions for the problems associated with each group of diagnostic alarm data.
15. The article of manufacture of any preceding clause, comprising instructions to output a notification indicating a group of the plurality of groups of diagnostic alarm data, the problem, or the solution for the problem.
16. The article of manufacture of any preceding clause, comprising instructions to filter and validate the diagnostic alarm data based on a set of rules resulting in a limited set of diagnostic alarm data.
17. A method, comprising:
   receiving diagnostic alarm data that relates to a health of a process control system;
   grouping the diagnostic alarm data into a plurality of groups; and
   identifying a problem associated with each group of diagnostic alarm data in the plurality of groups.
18. The method of any preceding clause, wherein grouping comprises identifying relationships among the diagnostic alarm data based on pre-defined relationships, user-defined relationships, or an analysis of characteristics of the diagnostic alarm data.
19. The method of any preceding clause, wherein identifying the problem comprises identifying one or more possible problems associated with each group of diagnostic alarm data based on known problem data, user-defined problem data, or the analysis of characteristics of the diagnostic alarm data.
20. The method of any preceding clause, comprising identifying a solution for the problem associated with each group of diagnostic alarm data based on known solution data, user-defined solution data, or an analysis of characteristics of the diagnostic alarm data.

## Claims

1. A system (10), comprising:
a device configured to:
receive diagnostic alarm data that relates to a health of a process control system (16);
group the diagnostic alarm data into a plurality of groups; and
identify a problem associated with each group of diagnostic alarm data in the plurality of groups.

2. The system of claim 1, wherein the device is configured to identify relationships among the diagnostic alarm data based on pre-defined relationships, user-defined relationships, or an analysis of characteristics of the diagnostic alarm data.

3. The system of claim 1 or claim 2, wherein the device is configured to identify one or more possible problems associated with each group of diagnostic alarm data based on known problem data, user-defined problem data, or an analysis of characteristics of the diagnostic alarm data.

4. The system of claim 1, 2 or 3, wherein the device is configured to analyze the diagnostic alarm data in each group to identify symptoms of a common problem affecting the health of the process control system.

5. The system of any preceding claim, wherein the device is configured to identify a plurality of possible problems associated with each group of diagnostic alarm data, and the device is configured to prioritize the plurality of possible problems.

6. The system of any preceding claim, wherein the device is configured to identify a solution for one or more problems associated with each group of diagnostic alarm data based on known solution data, user-defined solution data, or an analysis of characteristics of the diagnostic alarm data.

7. The system of claim 6, wherein the device is configured to identify a plurality of possible solutions for the one or more problems associated with each group of diagnostic alarm data, and the device is configured to prioritize the plurality of possible solutions.

8. The system of any preceding claim, wherein the device is configured to output a notification indicating a group of the plurality of groups of diagnostic alarm data, the problem, or a solution for the problem.

9. The system of any preceding claim, wherein the device is configured to filter the diagnostic alarm data based on a set of rules resulting in a limited set of diagnostic alarm data, and the device is configured to validate the diagnostic alarm data.

10. The system of any preceding claim, wherein the device is configured to receive the diagnostic alarm data via passive monitoring without interfering with operation of the process control system, and the device is configured to perform analysis and reporting relating to the diagnostic alarm data in real-time, at periodic intervals, or at user defined times.

11. A method, comprising:
receiving (14) diagnostic alarm data that relates to a health of a process control system;
grouping (130) the diagnostic alarm data into a plurality of groups; and
identifying (116) a problem associated with each group of diagnostic alarm data in the plurality of groups.

12. The method of claim 11, wherein grouping comprises identifying (142) relationships among the diagnostic alarm data based on pre-defined relationships, user-defined relationships, or an analysis of characteristics of the diagnostic alarm data.

13. The method of claim 11 or claim 12, wherein identifying the problem comprises identifying (132) one or more possible problems associated with each group of diagnostic alarm data based on known problem data, user-defined problem data, or the analysis of characteristics of the diagnostic alarm data.

14. The method of claim 11, 12 or 13, comprising identifying a solution for the problem associated with each group of diagnostic alarm data based on known solution data, user-defined solution data, or an analysis of characteristics of the diagnostic alarm data.

15. An article of manufacture, comprising:
one or more tangible, machine-readable media having encoded thereon processor-executable instructions for preferring the method of any one of claims 11 to 14.
